(19) Europäisches Patentamt
European Patent Office
Office européen des brevets

(11) Publication number: **0 171 285**
**A2**

(12) **EUROPEAN PATENT APPLICATION**

(21) Application number: **85305607.5**

(22) Date of filing: **07.08.85**

(51) Int. Cl.⁴: **H 01 M 10/50**, H 01 M 10/36

(30) Priority: **08.08.84 JP 164752/84**

(43) Date of publication of application: **12.02.86**
**Bulletin 86/7**

(84) Designated Contracting States: **AT DE FR GB IT**

(71) Applicant: **Kabushiki Kaisha Meidensha, 1-17, Ohsaki 2-chome, Shinagawa-ku Tokyo 141 (JP)**

(72) Inventor: **Jinnai, Kenichiro, 32-9 Higashiminemachi, Ota-ku Tokyo (JP)**
Inventor: **Hasimoto, Takafumi, 3-22-19 Asahimachi, Nerima-ku Tokyo (JP)**

(74) Representative: **Roos, Michael John et al, KILBURN & STRODE 30 John Street, London WC1N 2DD (GB)**

(54) **Method of operating zinc bromide electrolyte secondary battery.**

(57) A method of minimizing deterioriation of the energy efficiency and ensuring maximum possible effective utilization of the charged and discharged electric power of a zinc bromide electrolyte secondary battery (1) during its use is disclosed. The electrolytes (12, 14) are maintained at temperatures within a predetermined range. The method includes a step of maintaining the temperature of the electrolytes within a predetermined range by temperature controlling means (30, 32) for controlling a temperature of the electrolytes (12, 14) of an electrolyte circulation-type secondary battery for performing the above-mentioned method.

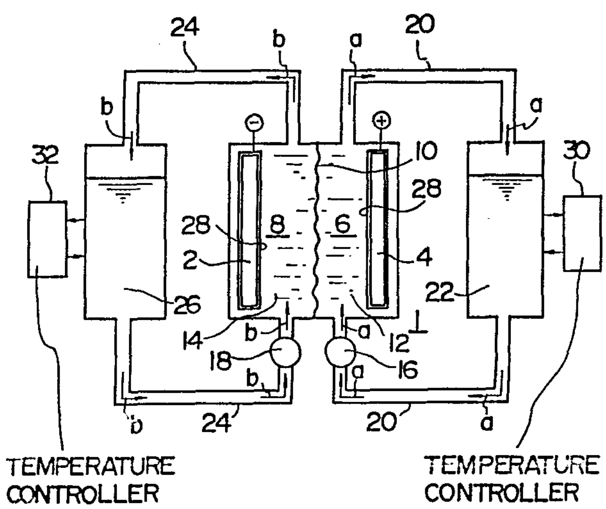


EP 0 171 285 A2

Method of Operating Zinc Bromide Electrolyte Secondary Battery

The present invention relates to a zinc bromide electrolyte secondary battery which can be used, for example, for the purpose of load levelling by storing night time surplus electric power and discharging stored electric power during daytime, or as a power source for vehicles.

Generally, this type of known secondary battery comprises a battery body containing positive and negative electrolytes, a circulating system for circulating the electrolytes through the battery body an electrolyte storage tank being included in the circulating system.

The battery body usually comprises a stack of a plurality of unit secondary cells. The unit secondary cell includes a positive electrode and a negative electrode opposed at a predetermined distance apart and a separator arranged between the positive and negative electrodes so as to define a positive electrode chamber between it and the positive electrode, and a negative electrode chamber between it and the negative electrode. The positive electrolyte is contained in the positive electrode chamber and the negative electrolyte is contained in the negative electrode chamber.

The circulating system includes a positive electrolyte circulating system and a negative electrolyte circulating system. The positive electrolyte system includes a positive electrolyte circulating pipe means arranged such that the positive electrolyte leaving the positive electrode chambers of each of the unit secondary cells is gathered and returned again by a pump to the positive electrode chambers. The negative electrolyte circulating system similarly includes a negative electrolyte circulating pipe means arranged such that the negative electrolyte leaving the negative electrode chambers of each of the unit secondary cells is gathered and returned again by a pump to the negative electrode chambers.

The tank includes a positive electrolyte storage tank and a negative electrolyte storage tank and the positive electrolyte storage tank is included in the positive electrolyte circulating pipe means. Likewise, the negative electrolyte storage tank is included in the negative electrolyte circulating pipe means.

The positive electrolyte comprises a solution of zinc bromide, a supporting electrolyte and a complexing agent which converts bromine molecules to a complex compound. In addition to these, upon charging, the positive electrolyte produces and contains bromine molecules and a complex compound of bromine molecules. The negative electrolyte comprises a solution of zinc bromide, a dendrite inhibitor, a supporting electrolyte and a bromine complexing agent. The separator is made of an ion-permeable porous membrane which prevents the permeation of bromine molecules and the bromine complex compound from the positive electrode chamber to the negative electrode chamber.

During the charging and discharging, the following oxidation-reduction reactions take place.

During charging the zinc ions in the negative electrode chamber are attracted to the negative electrode so that the zinc ions are provided with electrons and reduced on the surface of the negative electrode, thus depositing themselves as a zinc metal on the surface of the negative electrode. On the other hand, the zinc ions in the positive electrode chamber permeate through the separator and enter into the negative electrode chamber thereby similarly depositing themselves as a zinc metal. In this case, the bromine ions in the positive electrode chamber are attracted to the positive electrode so that the bromine ions lose their electrons and are oxidised on the surface of the positive electrode, thereby depositing themselves as bromine atoms on the surface of the positive electrode. A bromine molecule is formed by the bonding of two bromine atoms and the resulting bromine molecules are dissolved in the positive electrolyte. Also, the bromine ions in the negative electrode chamber permeate through the separator and enter into the positive electrode chamber where, similarly, they are formed into bromine molecules and dissolved in the positive electrolyte. A considerable proportion of these bromine molecules dissolved in the positive electrolye is converted to a bromine complex compound by the complexing agent in the electrolyte and it is then removed from the reaction system. Since the separator is made of a porous membrane which prevents the permeation of bromine molecules and the bromine complex compounds, the bromine molecules and the complex compounds remaining in the positive electrolyte are prevented from diffusing into the negative elctrolyte and they are retained in the positive electrolyte.

During discharge, the zinc metal deposited on the surface of the negative electrode is now gradually oxidized from its surface so that it is converted to zinc ions and enters into the negative electrolyte while leaving the electrons on the negative electrode.

A proportion of the zinc ions entering into the negative electrolyte permeates through the separator and enters into the positive electrolyte of the positive electrode chamber. In this case, the bromine molecules in the positive electrolyde are provided with electrons from the positive electrode on its surface and are reduced. Thus, they are converted to bromine ions and diffused into the positive electrolyte. The bromine ions diffused into the positive electrolyte permeate through the separator and are diffused into the negative electrolyte of the negative electrode chamber. The complex compound of bromine molecules is decomposed due to a decrease in the concentration of the bromine molecules in the positive electrolyte, and consequently the concentration of the bromine molecules in the positive electrolyte is maintained constant.

With the secondary battery used for the purpose of storing the night time surplus electric power or as a power source for vehicles, in order to ensure effective utilization of electric power, it is essential that the charged electric power is stored efficiently. However, the zinc bromide electrolyte secondary battery described above is disadvantageous in that, as the storage battery is used by charging and discharing it, the voltaic efficiency (the ratio of the discharged voltage to the charged voltage) and the coulombic efficiency (the ratio of the discharged amount of electricity to the charged amount of electricity) deteriorate and therefore the energy or the product of the voltaic efficiency and the coulombic efficiency is decreased, thereby making it difficult efficiently to utilize the electric power.

In order to prevent the energy efficiency from decreasing, the following means have been adopted heretofore:

a) In the case of a secondary battery indicated in European Patent Publication No. 89433 published on Sept. 28, 1983, an additional electrode is provided in the vicinity of each of the positive electrolyte inlet and outlet channels of each unit secondary cell, and the additional electrodes are connected to the positive electrode of said each unit secondary cell by a connector, thus absorbing a shunt current flowing into the positive electrode chamber of the unit secondary cell by these electrodes, and preventing the occurrence of abnormal electrode deposition.

b) In the case of a secondary battery indicated in our prior European Patent Publication No. 112068 published on June 27, 1984, an electrically conductive carbon fiber sheet having numerous small pores is affixed to the surface of the electrically conductive carbon plastic electrode and the electrical resistance of the electrode is reduced, whereby the energy efficiency of the secondary battery is improved.

In any of the foregoing cases, however, a stable and high energy efficiency could not be obtained.

On the other hand, as the zinc bromide electrolyte battery is an aqueous solution-type battery to be operated at normal temperatures, it is usually operated at room temperature. But, when the room temperature goes up to $35^{o}C$ or more in summer or it goes down to $0^{o}C$ or less in winter for example, it is found that the energy defficiency of the battery varies according to variation of room temperature and environmental temperature. Further, when the battery is in operation, the temperature of electrolyte goes up. It has been affirmed by many experiments that the energy efficiency of the battery is decreased in accordance with the rise or decrease of temperature of electrolyte.

It is one object of the present invention to provide a method for operating a zinc bromide electrolyte secondary battery which reduces deterioration in the energy efficiency of the secondary battery during its use and ensures effective utilisation of the charged and discharged electric power.

According to one aspect of the present invention a method of operating a zinc bromide electrolyte secondary battery which includes at least one unit secondary cell (1) having a pair of electrodes (2,4) located at a predetermined distance apart, an ion-permeable separator (10) arranged between said pair of electrodes (2,4) so as to define a positive electrode chamber (6) between said separator (10) and one (4) of said electrodes and a negative electrode chamber (8) between said separator (10) an the other (2) of said electrodes, and a positive electrolye (12) and a negative electrolyte (14) each comprising an aqueous solution of zinc bromide and respecively disposed in the positive and negative electrode chambers, is characterised in that each of said positive electrolyte (12) and said negative electrolyte (14) is maintained, by temperature controlling means (30,32), at a temperature or temperatures within a predetermined temperature range. Desirably the predetermined temperature range is $20^{\circ}$ to $40^{\circ}C$.

The positive and negative electrolytes are preferably caused to flow in and out of said positive and negative electrode chambers, respectively, by electrolyte circulation means which may include tanks for the positive and negative electrolyte and separate temperature controlling means may be associated with said tanks.

According to another aspect of the present invention a zinc bromide electrolyte secondary battery system includes at least one unit secondary cell (1) having a pair of electrodes (2,4) located at a predetermined distance apart, an ion-permeable separator (10) arranged between said pair of electrodes (2,4) so as to define a positive electrode chamber (6) between the said separator (10) and a positive one of said electrodes (4) and a negative electrode chamber (8) between said separator (10) and the other, negative, electrode (2), and a positive electrolyte (12) and a negative electrolyte (14) each comprising an aqueous solution of zinc bromide and respectively disposed in the positive and negative electrode chambers, is characterised by temperature controlling means (30,32) for maintaining the positive electrolyte and negative electrolyte temperature or temperatures within a predetermined temperature range.

The invention may be carried into practice in various ways, but one specific embodiment will now be described, by way of example, with reference to the accompanying drawings, in which:

Figure 1 is a schematic diagram of an electrolyte circulation-type secondary battery having a temperature controller for controlling the temperature of the electrolytes;

Figures 2 to 5 are graphs for four different electrodes, respectively, which show variations of the coulombic efficiency, voltaic efficiency and energy efficiency with the temperature of the electrolytes in a zinc bromide electrolyte secondary battery;

Figure 6 is a graph showing the variation of the coulombic efficiency with the temperature of the electrolytes in a zinc-zinc battery using an aqueous solution of zinc bromide, and

Figure 7 are microphotographs showing the metallic zinc deposited on the surface of the negative electrodes in an electrolyte circulation-type zinc bromide electrolyte secondary battery.

A method of operating a zinc bromide electrolyte secondary battery embodying the present invention features that the electrolytes of the secondary battery are maintained at a temperature within a predetermined temperature range.

As shown in Figure 1, a unit secondary cell 1 for an electrolyte circulation-type secondary battery, includes a pair of negative and positive electrodes 2 and 4, respectively, having a predetermined distance therebetween, a separator 10 arranged between the pair of electrodes 2 and 4 to divide the unit secondary cell 1 into a positive electrode chamber 6 and a negative electrode chamber 8, a positive electrolyte 12 in the positive electrode chamber 6, a negative electrolyte 14 in the negative electrode chamber 8, a positive electrolyte circulating pump 16, and a negative electrolyte circulating pump 18.

Each of the positive electrolyte 12 and the negative electrolyte 14 comprises an aqueous solution of zinc bromide, a supporting electrolyte, and a bromine complexing agent. Added to the positive electrolyte 12 is a complexing agent for converting bromine molecles to a complex compound, so that, upon charging, the positive electrolyte 12 produces and contains bromine molecules and a complex compound of bromine molecules. The negative electrolyte 14 further comprises a dendrite inhibitor. The separator 10 is an ion-permeable porous membrane of the type which prevents the permeation of bromine molecules and bromine complex compounds. Where a trace amount of bromine molecules diffuses into the negative electrode chamber 8, the complexing agent is also added to the negative electrolyte 14.

A positive electrolyte circulating pipe 20 is connected in loop form to the positive electrode chamber 6 so that the positive electrolyte 12 in the positive electrolyte chamber 6 is recirculated. The positive electrolyte circulating pipe 20 includes the pump 16 for circulating the positive electrolyte 12 in the direction of the arrows a, and a positive electrode storage tank 22.

As in the case of the positive electrode chamber 6, a negative electrolyte circulating pipe 24 is connected in loop form to the negative electrode chamber 8 so that the negative electrolyte 14 in the negative electrode chamber 8 is similarly recirculated. The negative electrolyte circulating pipe 24 includes the pump 18 for circulating the negative electrolyte 14 in the direction of the arrows b, and a negative electrolyte storage tank 26.

Each of the electrodes 2 and 4 is made of a conductive carbon black-plastics plate. This conductive carbon black-plastics plate can be produced by, for example, mixing polyethylene or Teflon (P.T.F.E.) having excellent bromine resistance and a density of 0.94 g/$cm^3$ or more, and conductive carbon black and/or graphite in proportions of 80 to 60 wt. % for the former and 20 to 40 wt. % for the latter, kneading and then forming the material into a plate.

At least one of the opposing surfaces of the pair of electrodes 2 and 4 is integrally adhered and covered with a carbon fiber sheet 28. The purpose of integrally covering the surface of either one or both of the electrodes 2 and 4 with the carbon fiber sheet 28 is to increase the surface area of the positive electrode and/or the negative electrode, facilitate the electro chemical reactions at the surface of the positive electrode and/or the negative electrode and increase the energy efficiency. The carbon fiber is used in the form of sheets because in this way the carbon fiber can be handled conveniently. The carbon fiber sheets may for example be in the form of a woven cloth or alternatively they may be made to take any other form such as felt or knitted fabric. The carbon fiber sheet should preferably have a weight per unit area of 40 to 180 g/$m^2$, a thickness of 0.25 to 0.56 mm, a porosity of 3 to 15%, a carbon fiber pore diameter of 1.0 to 45 nm and a pore volume of 0.1 to 1.5 $cm^3$/g.

The positive electrolyte 12 and/or the negative electrolyte 14 is cooled and/or heated and its liquid temperature is maintained within a range of 20 to 40°C. In Figure 1, a positive electrolyte temperature controller 30 is provided for the positive electrolyte storage tank 22, and a negative electrolyte temperature controller 32 is provided for the negative electrolyte storage tank 26. The positive electrolyte temperature controller 30 and the negative electrolyte teperature controller 32 respectively include means for cooling and/or heating the positive electrolyte 12 and the negative electrolyte 14, and they are adapted respectively to maintain the temperature of the positive electrolyte 12 and the negative electrolyte 14 between 20 and 40°C.

When the temperature of the positive electrolyte 12 and the negative electrolyte 14 are respectively maintained between 20 and 40°C by the positive electrolyte temperature controller 30 and the negative electrolyte temperature controller 32, the internal resistance of the electrolyte circulation-type secondary battery is controlled at a decreased value and deterioration of the energy efficiency is decreased thereby ensuring effective utilization of the charged and discharged electric power.

The following example substantiates the foregoing description.

Example 1

The electrolyte circulation-type secondary battery used in this example was a bipolar type zinc bromide electrolyte secondary battery comprising ten unit secondary cells stacked in series. In this secondary battery, each of the electrodes was made of a carbon black plastics plate each side of which had a surface area of 400 $cm^2$. It is to be noted that four different electrodes (A) to (D) were used having the following characteristics.

Electrode (A): the electrode had a specific resistance $\rho = 0.47\ \Omega.cm$, and a linear expansion

coefficient $\alpha = 23.78 \times 10^{-5}$/K, and a carbon fiber sheet was integrally adhered by heat-compression bonding only to the positive electrode surface. The sheet had weight per unit area of 82 g/$m^2$, a thickness of 0.48mm, a pore volume of 0.8 $cm^3$/g, a carbon fiber pore diameter of 1.5 to 12 nm and a porosity of 13.7 %.

Electrode (B): the electrode had a specific resistance $\rho = 0.08$ Ω.cm and a linear expansion coefficient $\alpha = 8.2 \times 10^{-5}$/K and a carbon fiber sheet was integrally adhered by heat-compression bonding only to the positive electrode surface. The sheet had a weight per unit area of 85 g/$m^2$, a thickness of 0.47 mm, a pore volume of 0.4 $cm^3$/g, a carbon fiber pore diameter of 1.5 to 30 nm and a porosity of 7.2%.

Electrode (C): the electrode of the same characteristics as the electrode (A) was used. The same carbon fiber sheet as in the case of the electrode (A) was integrally adhered by heat-compression bonding to the positive and negative electrode surfaces.

Electrode (D): the electrode of the same characteristics as the electrode (B) was used and the same carbon fiber sheet as in the case of the electrode (B) was integrally adhered by heat-compression bonding to the positive and negative electrode surfaces.

Also, in these examples, the charging and discharging currents were 10A and the charging and dischargng times were 8 hours. The state of charging was 67% and the temperatures of the electrolytes were between 15°C and 50°C and 60°C.

From the results of these examples the coulombic efficiency, the voltaic efficiency and the energy efficiency shown in Figures 2 to 5, respectively, were obtained. Figure 2 shows the characteristics of the electrode (A), Figure 3 the characteristics of the electrode (B), Figure 4 the characteristics of the electrode (C) and Figure 5 the characteristics of the electrode (D). In the Figures, the curve (a) indicates the coulombic efficiency, the curve (b) the voltaic efficiency and the curve (c) the energy efficiency.

As shown in the Figures, the coulombic efficiency tends to start decreasing when the electrolyte temperature is about 30°C and rapidly decreases when the temperature exceeds 40°C in the case of the electrodes (A), (B), (C) and (D), respectively. In the case of the electrode (A), the voltaic efficiency gradually increases up to the electrolyte temperature of about 40°C and it tends to decrease as the electrolyte temperature exceeds 40°C. In the cae of the electrode (B), the voltaic efficiency increases with increase in the electrolyte temperature. In the case of the electrode (C), the voltaic efficiency gradually increases up to the electrolyte temperature of about 30°C and tends to start decreasing as the temperature exceeds 30°C. In the case of the electrode (D), the voltage efficiency increases with increase in the electrolyte temperature up to 50°C and it rapidly decreases as the temperature exceeds 50°C. The energy effficiency given in terms of the product of the coulombic efficiency and the voltaic efficiency, and indicated in each case by curve (c), shows the maximum value in the electrolyte temperature range of 20°C to 49°C and tends to decrease rapidly as the temperature exceeds 40°C with each of the electrodes (A), (B), (C) and (D).

It is considered that the energy efficiency of the zinc bromide electrolyte secondary battery decreases with increase or decrease in the temperature of the electrolyte due to the following reasons (i) to (iv).

(i) The increase in the internal resistance of the electrolytes.

(ii) The increase in the activation over-voltage for charging transfer reaction and the concentration activation over-voltage.

(iii) The increase in the self-discharging rate of the zinc metal due to the bromine molecules.

(iv) The decrease in the adhesion of the deposited zinc metal to the surface of the negative electrodes due to the coarsening of the crystals in the deposited zinc.

These facts will be illustrated further by the following examples.

Example 2

A zinc-zinc battery using metallic zinc for both of its positive and negative electrodes and not using the separator was made with a view to maintaining constant the concentration of the zinc ions in the electrolyte and investigating variations of the coulombic efficiency only due to the temperature changes of the electrolyte, the temperature of the zinc bromide electrolyte was varied between 20°C and 50°C, and charging and discharging experiments were effected.

The results of the experiments showed the variation of the coulombic efficiency as shown in Figure 6. From the Figure it will be seen that the coulombic efficiency decreases as the temperature of the electrolyte exceeds 40°C irresepctive of the concentration of the zinc bromide in the electrolyte.

Example 3

A zinc bromide electrolyte secondary battery was charged at an electrolyte temperature of 30°C and another zinc bromide electrolyte secondary battery was charged at the electrolyte temperature of 50°C thereby depositing metallic zinc on the surfaces of the negative electrodes. The forms of the thus deposited metallic zinc in these batteries were observed through a microscope. Figure 7 shows the microphotographs of the deposited metallic zinc, (a) shows the case at the electrolyte temperature of 30° C and (b) shows the case at the electrolyte temperature of 50°C. From these photographs it will be seen that increase in the electrolyte temperature decreases the rate of deposition reaction of the zinc at the surface of the negative electrodes and hence coarsens the crystal grains in the deposited zinc. It is considered that the coarsening of the crystal grains deteriorates the adhesion of deposited zinc at the surface of the negative electrodes. Thus, it is considered that this deterioration in the adhesion of metallic zinc deposited at the surface of the negative electrodes constitutes a cause of the fact that the coulombic efficiency decreases rapidly when the electrolyte temperature exceeds 40°C as investigated by Example 2.

Example 4

Using a zinc bromide electrolyte secondary battery, the electrolyte temperature was varied from 20°C up to 50°C and the resulting self-discharging rates {(loss in weight of zinc after self-discharging/weight of zinc before self-discharging) x 100} were examined. The electrolyte of the zinc bromide electrolyte secondary battery consisted of an aqueous solution of 3 mol/$\ell$ zinc bromide containing 2.26 x $10^{-3}$ mol/$\ell$ of bromine. The self-discharging rates were as shown in the following Table 1.

Table 1

| Electrolyte (°C) | Self-discharging rate(%)/day |
|---|---|
| 20 | 0.26 |
| 30 | 0.40 |
| 40 | 0.60 |
| 50 | 0.89 |

From Table 1 it will be seen that the self-discharging rate at the electrolyte temperature of 50°C shows an increase of 0.29%/day as compared with that at the electrolyte temperature of 40°C. This increase in the self-discharging rate is smaller than the rapid decrease in the coulombic efficiency which took place when the electrolyte temperature exceeded 40°C as shown in Example 2. Thus, it is considered that the decrease in the coulombic efficiency due to the self-discharging rate of the deposited zinc is not so great.

Claims:

1. A method of operating a zinc bromide electrolyte secondary battery including at least one unit secondary cell 1 having a pair of electrodes (2,4) located at a predetermined distance apart, an ion-permeable separator (10) arranged between said pair of electrodes (2,4) so as to define a positive electrode chamber (6) between said separator (10) and one (4) of said electrodes and a negative electrode chamber (8) between said separator (10) and the other (2) of said electrodes, and a positive electrolyte (12) and a negative electrolyte (14) each comprising an aqueous solution of zinc bromide and respectively disposed in the positive and negative electrode chambers, characterised in that each of said positive electrolyte (12) and said negative electrolyte (14) is maintained, by temperature controlling means (30,32), at a temperature or temperatures within a predetermined temperature range.

2. A method according to claim 1, characterised in that said positive electrolyte (12) and said negative electrolyte (14) are caused to flow in and flow out of said positive and negative electrode chambers (6,8) respectively, by electrolyte circulation means (16,18).

3. A method according to claim 1 or claim 2, characterised in that siad predetermined temperature range is 20 to 40$^{o}$C.

4. A method according to any one of the preceding claims characterised in that said positive electrolyte (12) contacts a carbon fiber sheet (28) adhered to a positive electrode plate (4).

5. A method according to any one of the preceding claims, characterised in that said positive and negative electrolytes (12,14) each contact a carbon fiber sheet (28) which is adhered to each of a positive and negative electrode plate (2,4).

6. A method according to claim 4 or claim 5 characterised in that said carbon fiber sheet(s) (28) has (have) a carbon fiber pore diameter of 1.0 to 45 nm and a porosity of 3 to 15%.

7. A zinc bromide electrolyte secondary battery system including at least one unit secondary cell (1) having a pair of electrodes (2,4) located at a predetermined distance apart, an ion-permeable separator (10) arranged between said pair of electrodes (2,4) so as to define a positive electrode chamber (6) between the said separator (10) and a positive one of said electrodes (4) and a negative electrode chamber(8) between said separator (10) and the other, negative, electrode (2), and a positive electrolyte (12) and a negative electrolyte (14) each comprising an aqueous solution of zinc bromide and respectively disposed in the positive and negative electrode chambers, characterised by temperature controlling means (30,32) for maintaining the positive electrolyte and the negative electrolyte temperature or temperatures within a predetermined temperature range.

8. A battery as claimed in claim 7 including electrolyte circulation means (16,18) for causing the electrolyte to flow in and flow out of said positive and negative electrode chambers (6,8) respectively.

9. A battery as claimed in claim 7 or claim 8 in which the temperature controlling means is arranged to maintain said predetermined temperature between 20 and 40°C.

10. A battery as claimed in claim 8 or claim 9 when appendent to claim 8 characterised in that the electrolyte circulation means (16,18) includes positive and negative electrolyte tanks, respectively, and a separate temperature controlling means is associated with each tank.

FIG. 1

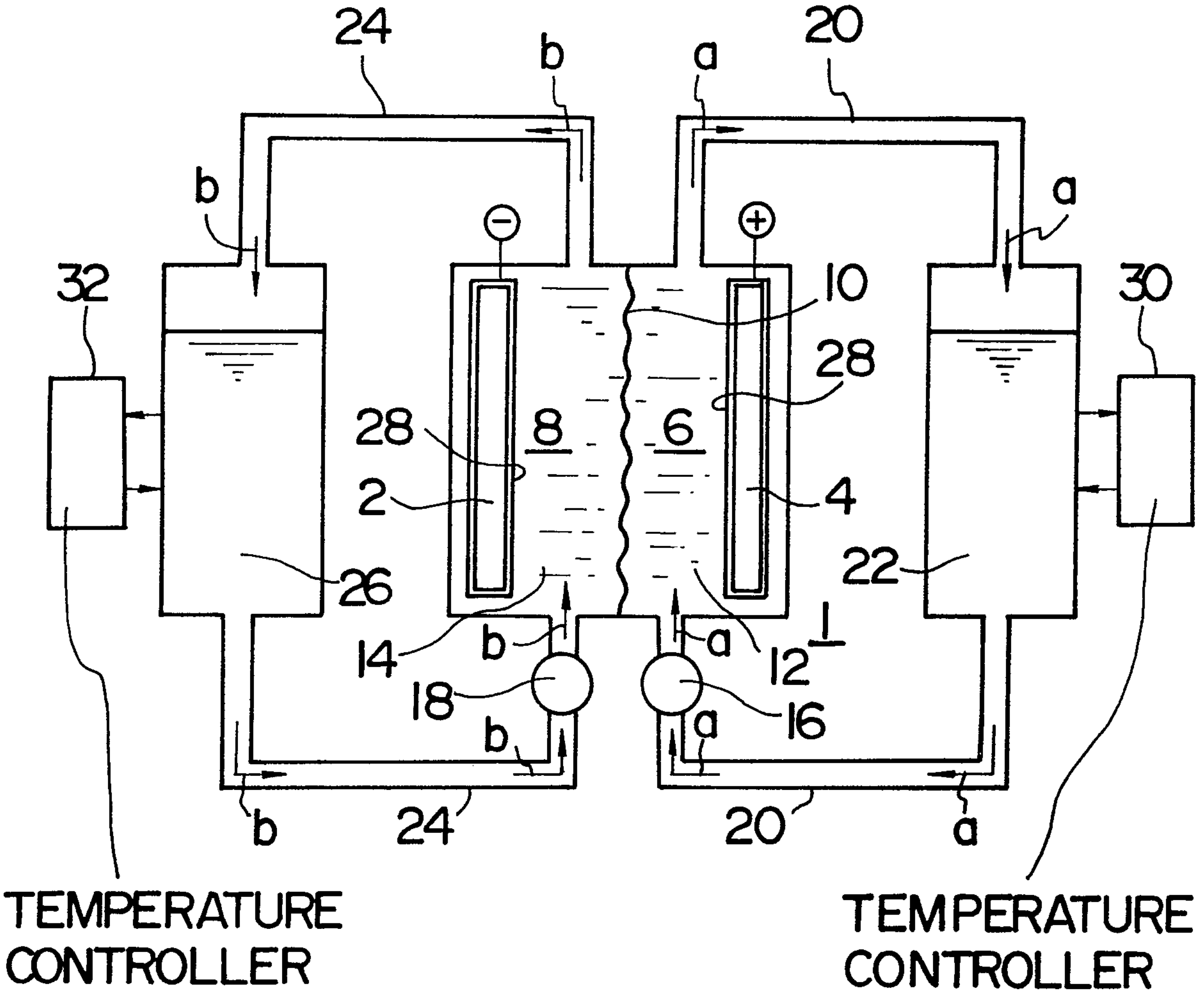
24
b
a
20
b
a
32
30
10
28
28
8
6
2
4
26
22
14
b
a
12
1
18
16
b
a
b
24
20
a
TEMPERATURE CONTROLLER
TEMPERATURE CONTROLLER

FIG. 2

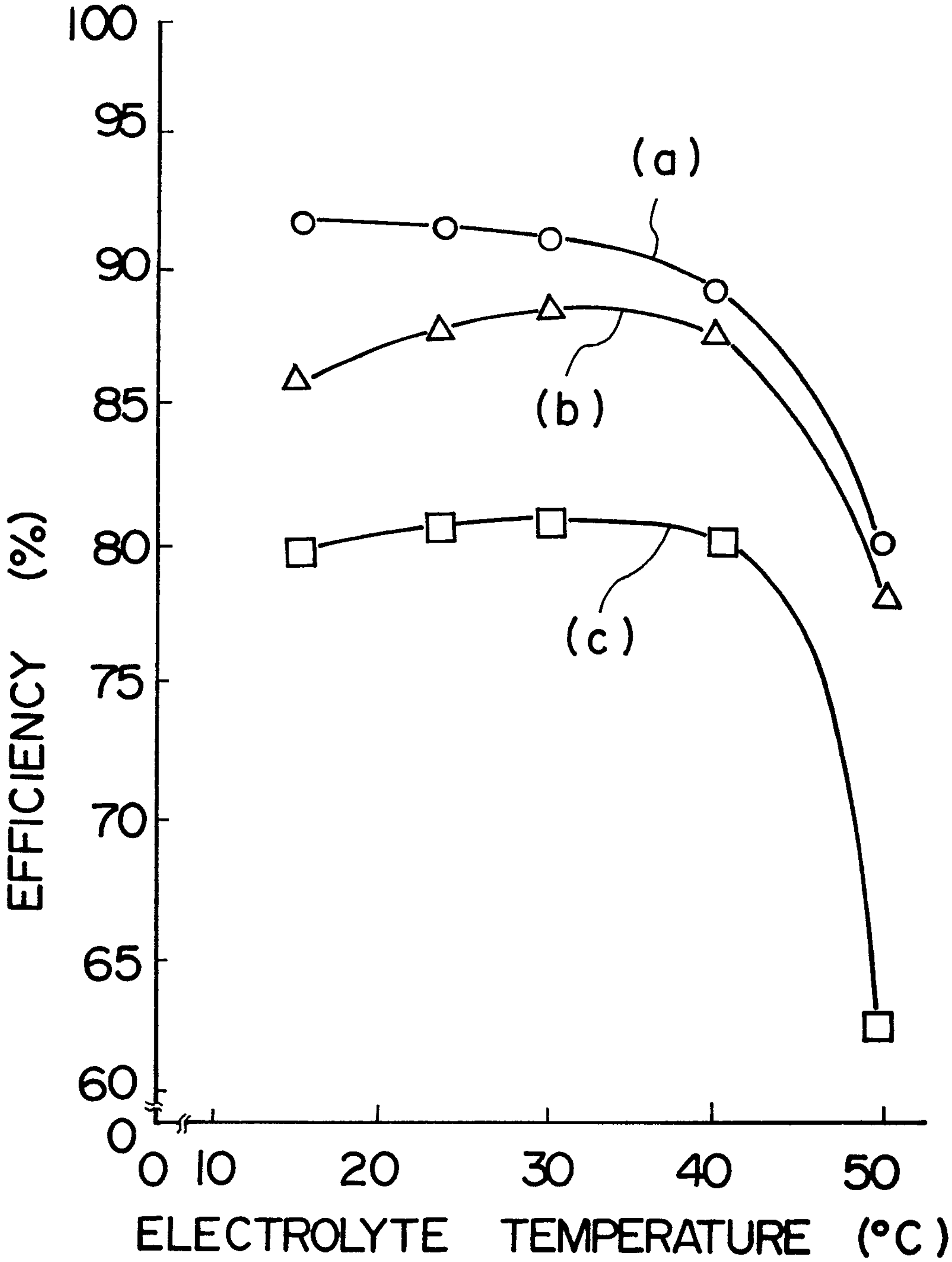
100
95
90
85
80
75
70
65
60
0
EFFICIENCY (%)
(a)
(b)
(c)
0 10 20 30 40 50
ELECTROLYTE TEMPERATURE (°C)

FIG. 3

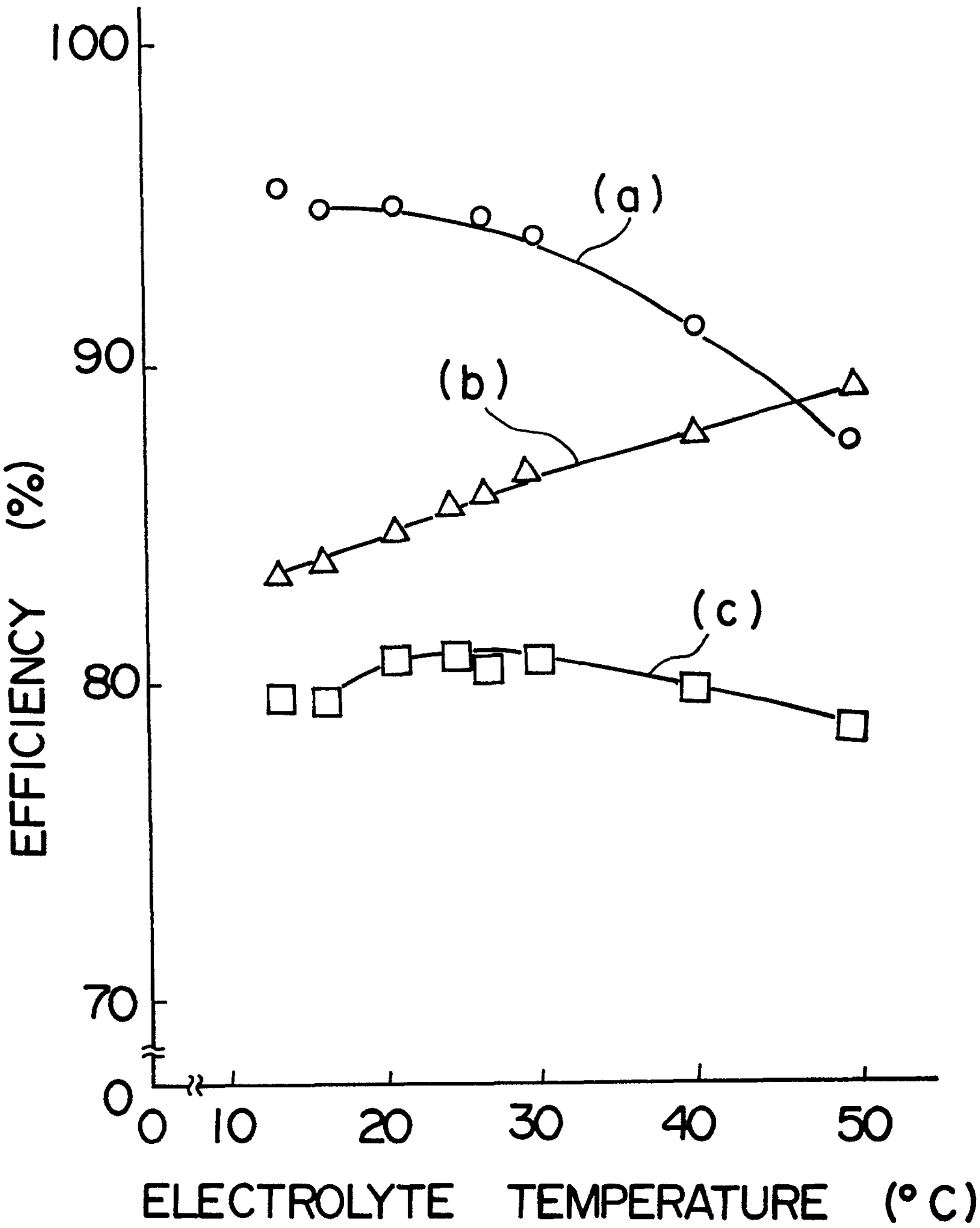
100
90
80
70
0
EFFICIENCY (%)
(a)
(b)
(c)
0
10
20
30
40
50
ELECTROLYTE TEMPERATURE (°C)

FIG. 4

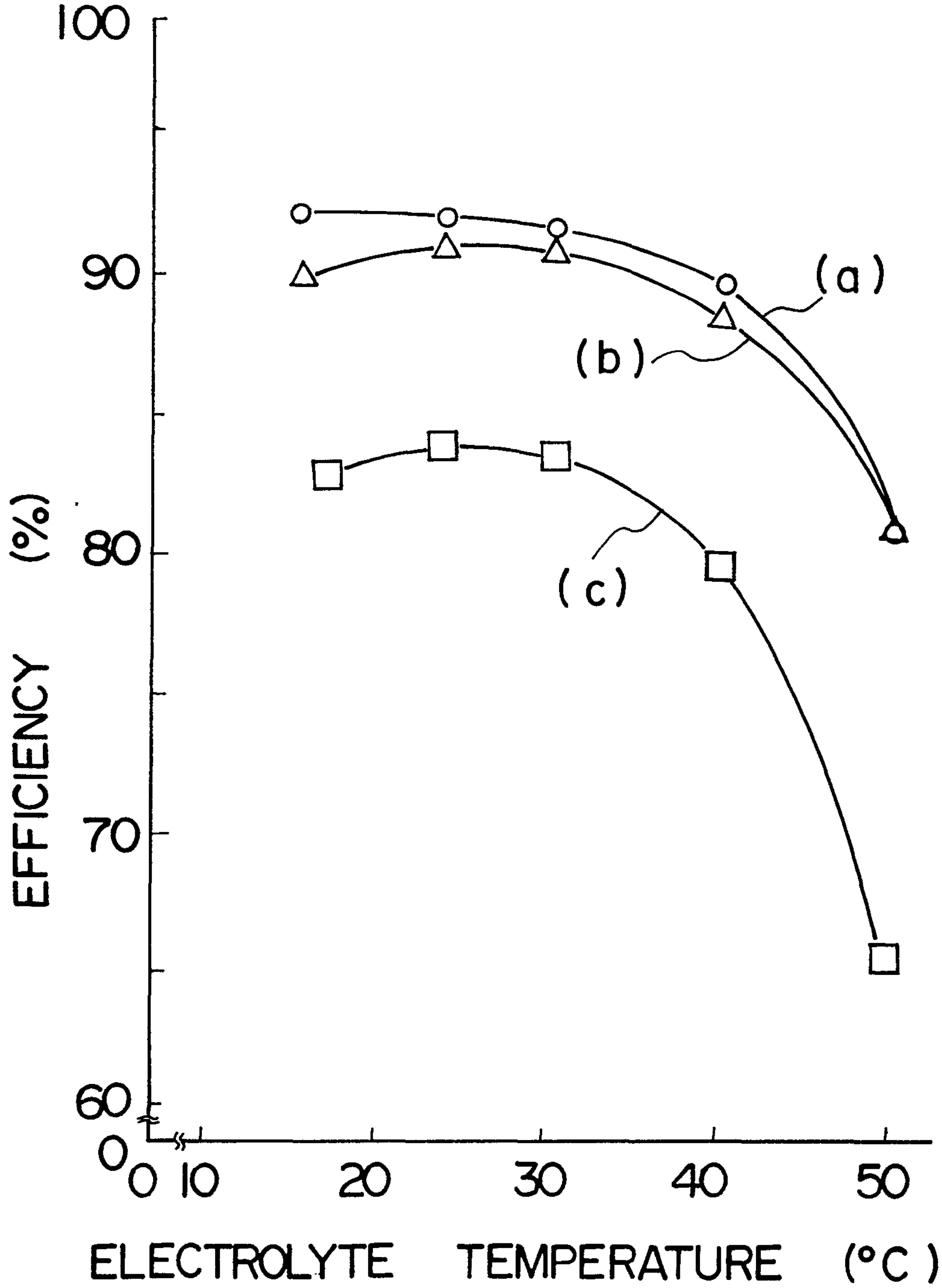
100
90
80
70
60
0
EFFICIENCY (%)
(a)
(b)
(c)
0
0 10
20
30
40
50
ELECTROLYTE TEMPERATURE (°C)

FIG. 5

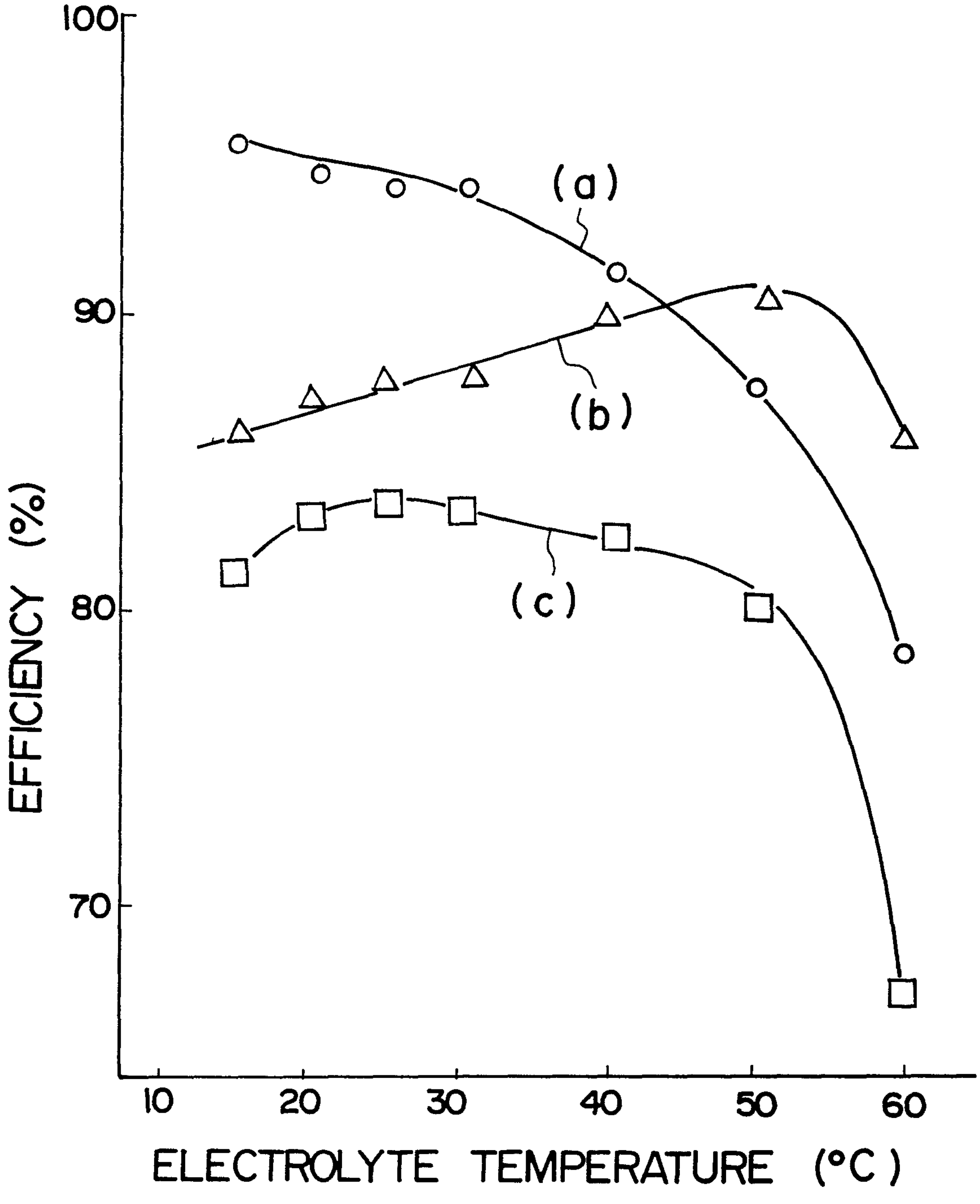
100
90
80
70
EFFICIENCY (%)
(a)
(b)
(c)
10
20
30
40
50
60
ELECTROLYTE TEMPERATURE (°C)

FIG. 6

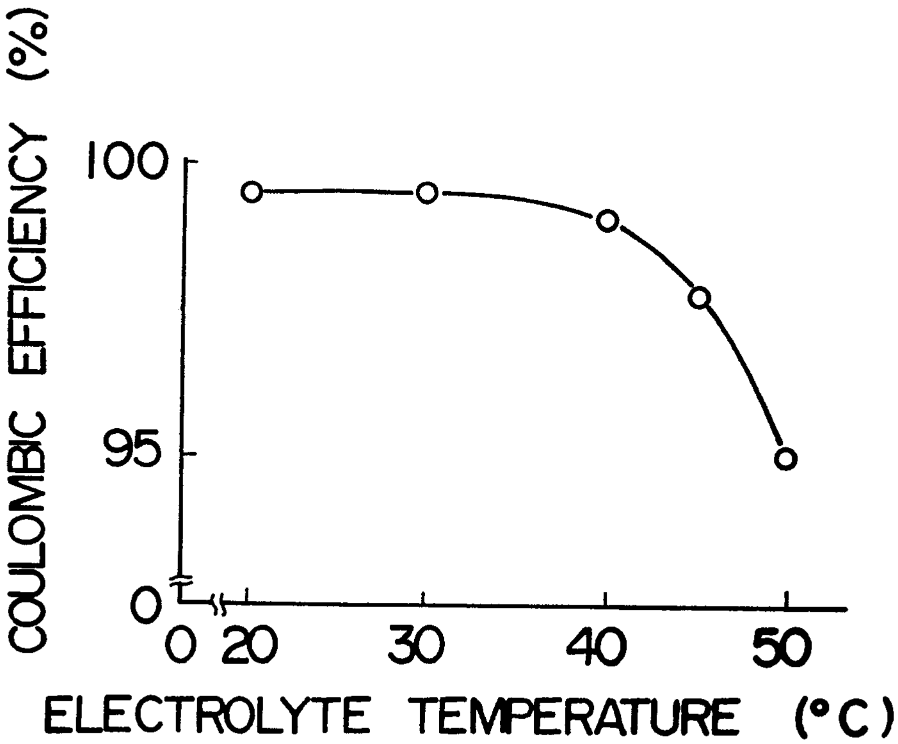
COULOMBIC EFFICIENCY (%)
100
95
0
0
20
30
40
50
ELECTROLYTE TEMPERATURE (°C)

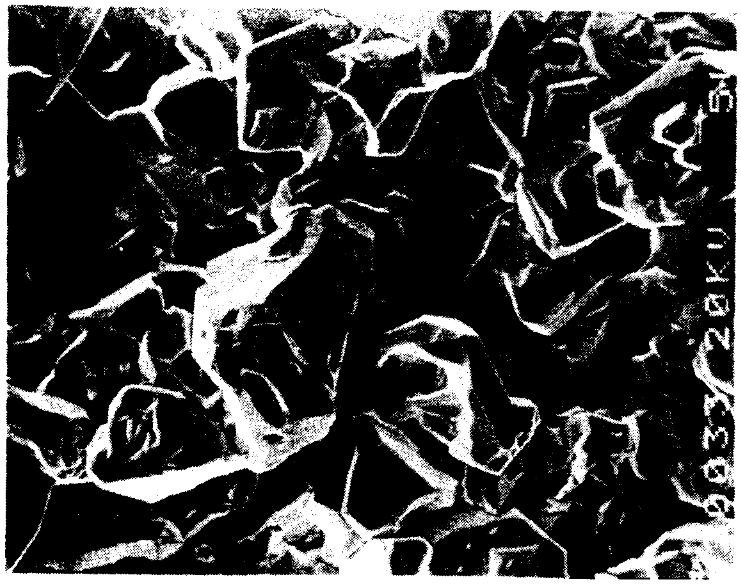

FIG. 7b

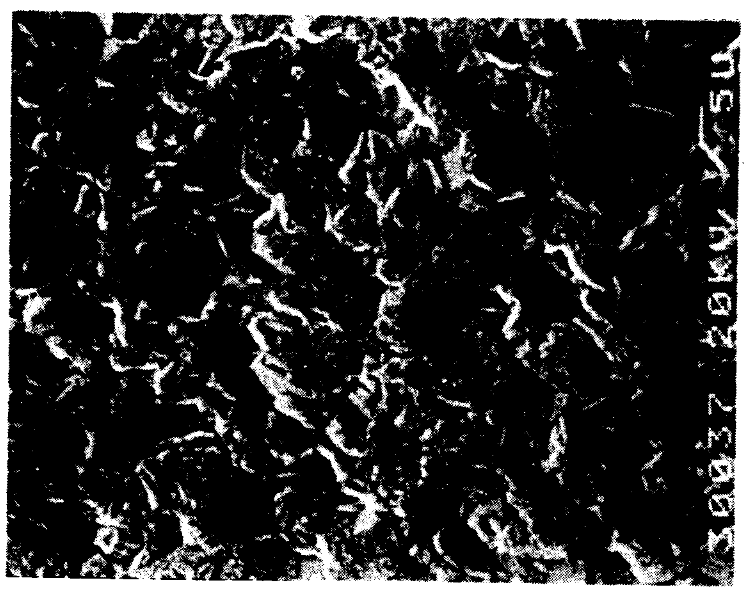

FIG. 7a